# FASCICULE DE BREVET EUROPEEN

(11) **EP 0 361 994 B1**
(45) Date de publication et mention de la délivrance du brevet: **24.02.1993**
(21) Numéro de dépôt: 89402296.1
(22) Date de dépôt: 17.08.1989
(51) Int. Cl.: B60J 10/04

(54) **Profil d'étancheite de glace mobile, notamment de glace ou vitre d'automobile**
Dichtung für verschiebbare Scheiben, insbesondere für Kraftfahrzeugfenster
Sealing joint for a sliding pane, particularly for a motor vehicle window

(30) Priorité: 25.08.1988 FR 8811223
(43) Date de publication de la demande: 04.04.1990
(60) Demande divisionnaire: 92201154.9
(73) Titulaire: HUTCHINSON, F-75008 Paris (FR)
(72) Inventeur: Guillon, Henri, F-78740 Vaux-sur-Seine (FR); Malnoult, Hervé, F-28110 Luce (FR)
(74) Mandataire: Orès, Bernard

(56) Documents cités:
- FR-A- 2 555 698

## Description

L'invention a pour objet un profil d'étanchéité de glace mobile, notamment de véhicule automobile.

On connaît déjà, dans de nombreuses réalisations, des joints d'étanchéité pour vitre ou glace d'automobile, montés fixes sur le cadre ou châssis de la porte du véhicule qu'ils équipent et désignés sous le nom de "coulisses de glace" lorsqu'ils forment l'encadrement supérieur et latéral de la baie propre à être ouverte ou fermée par ladite glace mobile, tandis qu'ils sont désignés sous le nom de "profils d'étanchéité de bas de glace" ou de "lécheurs" lorsqu'ils sont prévus sur le bord inférieur de ladite baie. Si les lécheurs, de même que les coulisses, sont destinés à procurer l'étanchéité requise à l'eau et à l'air d'une part, ils n'en ont pas moins des fonctions différentes. Ainsi, alors que les coulisses ont aussi un rôle de guidage et de protection, celui-ci n'est pas requis des lécheurs dont on attend par contre qu'ils contribuent à l'aspect esthétique du véhicule, tout en formant une saillie aussi faible que possible par rapport à la baie de la porte.

Les solutions apportées à ces problèmes dans l'art antérieur ont abouti à la mise sur le marché de joints d'étanchéité comprenant essentiellement une ou deux lèvre(s) d'étanchéité en caoutchouc naturel ou synthétique, portée(s) par un talon ou un cadre généralement en U, suivant qu'ils sont destinés à des lécheurs ou à des coulisses, la ou les lèvre(s) s'appliquant en se déformant contre la surface mobile.

Toutefois, comme l'application d'une telle lèvre contre la glace a tendance à freiner le coulissement de celle-ci, il a été proposé de recouvrir la surface de la lèvre qui est en contact avec la vitre d'une couche possédant de bonnes propriétés de glissement.

A cet effet, les lèvres d'étanchéité de certains lécheurs et de certaines coulisses ont été revêtues d'une couche réalisée par flocage de fibres ou poils textiles formant un revêtement quelque peu analogue à un velours et, si les propriétés de glissement en sont améliorées, les lèvres ainsi traitées perdent cependant assez rapidement leurs qualités en raison, notamment, de leur usure relativement rapide. Ces lèvres ont donc été remplacées par des lèvres revêtues d'un "glissant" présentant une surface continue en polyoléfine, polytétrafluoroéthylène ou autre matériau, généralement en matière synthétique, résistant bien à l'usure par frottement et assurant une bonne étanchéité à l'eau et à l'air tout en ayant de bonnes propriétés de glissement. Cette solution n'est cependant pas entièrement satisfaisante car elle accentue les risques de rayures des vitres par de la poussière, rayures qui sont à la fois inesthétiques et fragilisantes.

On a également proposé, dans FR-A-2 555 698, notamment sur la figure 3 de ce document, une coulisse pour glace mobile comportant un corps et au moins une lèvre d'étanchéité présentant un premier revêtement souple de fibres ou poils textiles floqués et un second revêtement plus dur à bonnes propriétés de glissement déposé sur la pointe de la lèvre. Dans ce document, toutefois, le flocage n'est prévu qu'à titre esthétique et n'apporte pas de solution au problème posé.

C'est, par conséquent, un but de l'invention de fournir un profil d'étanchéité de coulisse ou de lécheur de bas de glace mobile de véhicule automobile de réalisation simple et économique, qui tout en assurant une bonne étanchéité à l'eau et une bonne isolation phonique, n'endommage pas la vitre ou glace avec laquelle il coopère.

Le problème est résolu dans un profil d'étanchéité pour glace mobile déplaçable entre une position baissée et une position levée et qui est plus proche du profil d'étanchéité dans sa position levée que dans sa position baissée, ledit profil comportant un corps et au moins une lèvre d'étanchéité présentant un premier revêtement souple de fibres ou poils textiles floqués et un second revêtement plus dur, à bonnes propriétés de glissement déposé sur la pointe de la lèvre par la combinaison de ces deux types de revêtement de façon telle qu'ils coopèrent de manière à réduire l'usure du revêtement déposé par flocage, désigné ci-après par l'expression "revêtement souple" pour le distinguer de l'autre revêtement précité qui sera désigné, par comparaison, en tant que "revêtement dur".

La présence d'un revêtement souple sur une lèvre d'étanchéité, qui retient les poussières et "amortit" la pression du revêtement dur diminue le risque de rayures par poussières et excès de pression du revêtement dur sur la glace tandis que la surface continue d'un revêtement "dur" sur la pointe de la lèvre ou sur d'autres parties du profil, assure la précision du guidage et la continuité de l'étanchéité.

Un profil d'étanchéité pour glace mobile déplaçable entre une position baissée et une position levée et qui est plus proche du profil d'étanchéité dans sa position levée que dans sa position baissée, ledit profil comportant un corps et au moins une lèvre d'étanchéité présentant un premier revêtement souple de fibres ou poils textiles floqués et un second revêtement plus dur, à bonnes propriétés de glissement déposé sur la pointe de la lèvre est caractérisé, selon l'invention, en ce que la lèvre est orientée de manière à faire avec la direction perpendiculaire à la glace un angle inférieur à 90°, d'une part, et est de longueur et de courbure telles, d'autre part, que la lèvre exerce sur la glace une pression faible mais suffisante pour en assurer l'étanchéité et répartie entre les deux revêtements pour éviter l'usure du revêtement souple qui est en contact avec ladite glace au cours du déplacement de cette dernière et le rayage de la glace par le revêtement plus dur ce dernier assurant la précision du guidage et la continuité de l'étanchéité.

La pointe de la lèvre n'exerce sur la glace qu'une pression très faible, juste suffisante pour assurer l'étanchéité laquelle est renforcée par la partie floquée du revêtement, et les risques de rayure de la vitre sont donc considérablement réduits par rapport à un dispositif dont toute la face en contact avec la glace est revêtue de glissant. La pression de la pointe peut d'ailleurs diminuer légèrement à mesure que la glace émerge du lécheur et qu'elle se rapproche alors du profil, la réaction élastique de la lèvre ne créant alors qu'une faible réaction pratiquement transversale au niveau de la pointe. Toutefois, cette pression reste suffisante pour éviter une usure précoce du flocage.

Cette combinaison de revêtements permet ainsi d'assurer l'étanchéité tout en évitant de rayer la glace grâce au faible contact de la pointe de la lèvre de la vitre et à l'effet amortisseur qu'exerce la lèvre dans son ensemble grâce à sa souplesse et à sa géométrie.

Dans une réalisation d'un profil d'étanchéité selon l'invention, notamment un lécheur de glace ou vitre d'automobile, la lèvre d'étanchéité est orientée de manière à faire avec la direction perpendiculaire à la glace un angle de préférence inférieur à 45° lorsque la glace est complètement escamotée et un angle supérieur à 45° lorsque la glace ferme la baie qu'elle équipe.

Le premier et le second revêtements sont contigüs, le flocage régnant sur la plus grande partie de la surface de la lèvre destinée à venir en contact avec la glace.

Dans une réalisation avantageuse, la lèvre est montée sur une pince ou talon en forme générale de π, comportant éventuellement une armature, et muni de griffes d'accrochage du dispositif sur la carrosserie comme décrit dans FR-A-2 628 173 déposé le 01-03-88 et publié le 8-09-89 (correspondant à EP-A-0 333 056), la lèvre étant reliée par sa base à l'âme du talon.

On notera au passage que, dans la mesure où les documents EP-A-0 333 356 et, par exemple, EP-A-0 349 389 font partie de l'art antérieur au sens de l'Art. 54(3) et (4) CBE, il ne sont pas à prendre en considération pour la question de l'activité inventive (Art. 56 CBE)

Dans une réalisation de l'invention, celle-ci prévoit que la ou les lèvre(s) et le talon ou le corps du profilé soient réalisés en des matériaux de dureté et d'élasticité différentes, la lèvre (ou les lèvres) étant plus déformable(s) que le talon pour assurer une meilleure étanchéité, les zones de raccordement de la lèvre au talon ou corps étant éventuellement encore plus facilement déformables élastiquement que la ou les lèvre(s) proprement dite(s).

Le glissant qui constitue le revêtement de la pointe de la lèvre d'étanchéité ou de certaines parties du profilé est avantageusement rapporté sur la pointe de la lèvre ou sur ces parties lors de la fabrication du dispositif par coextrusion d'élastomères et/ou de plastomères, comme du caoutchouc ou du PVC, ou d'un matériau thermoplastique.

En variante, cette couche de glissant est réalisée par trempage ou pulvérisation, le cas échéant avec masques ou prétraitement des zones ne devant pas être recouvertes.

D'autres caractéristiques et avantages de l'invention apparaîtront de la description qui suit, faite à titre d'exemple et en référence au dessin annexé dans lequel :
- la figure 1 est une vue partielle illustrant une partie de carrosserie d'automobile ;
- la figure 2 est une vue en coupe transversale d'un profil selon l'invention réalisé en tant que lécheur de bas de glace.

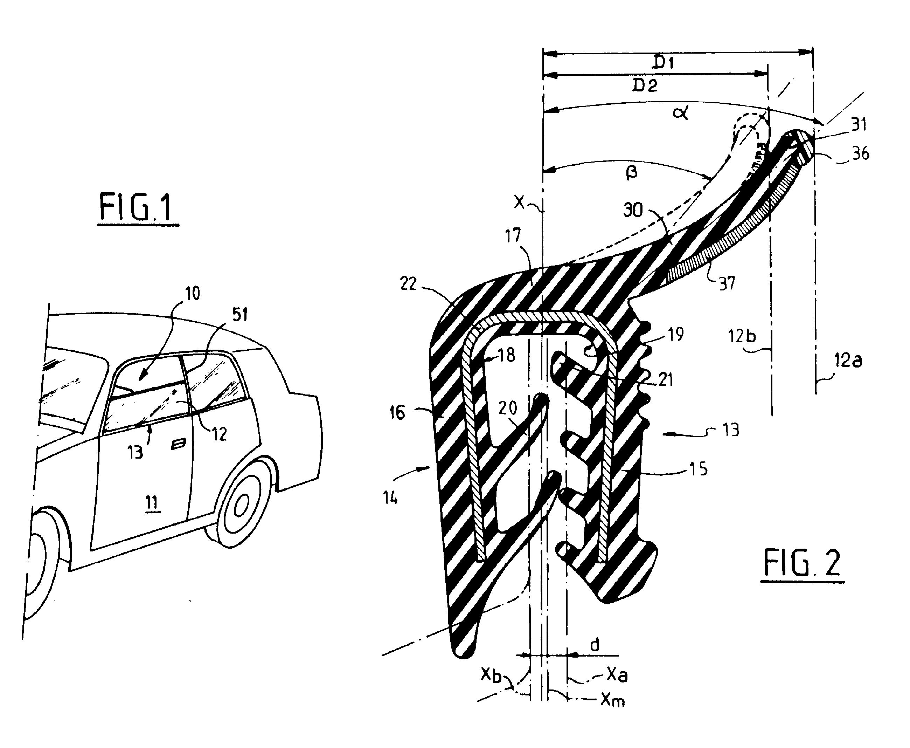

On se réfère d'abord à la figure 1 qui montre un lécheur 13 prévu à la partie inférieure de la baie 10 d'une porte 11 d'automobile, propre à être fermée par une vitre ou glace coulissante 12, ladite vitre ou glace étant guidée latéralement par des coulisses de glace 51 et étant propre à coopérer avec une coulisse supérieure non représentée, s'étendant sensiblement parallèlement au lécheur 13.

Ce dernier, représenté figure 2, comprend essentiellement une lèvre d'étanchéité 30 portée par une pince ou talon 14, à section droite générale en ^{.}, à ailes 15 et 16 sensiblement parallèles, réunies par une âme 17, les ailes 15 et 16 présentant sur leurs faces en regard 18 et 19, respectivement, des saillies ou nervures comme 20 et 21 de fixation sur le cadre ou châssis de la porte 11, non représenté. Dans la forme de réalisation décrite et illustrée, le talon 14 est armé par un profilé en U, 22, avantageusement métallique, par exemple en aluminium, et qui est noyé dans la masse du matériau constitutif du profil, ledit matériau pouvant être un matériau élastomère, comme un caoutchouc, un matériau plastomère comme du PVC, ou un matériau thermoplastique élastomère.

L'invention envisage également dans son cadre de réaliser le profil non pas en un seul matériau, mais en des matériaux différant entre eux par certaines de leurs propriétés, par exemple leur dureté, la pince ou talon 14 étant alors de préférence réalisé dans un matériau de plus grande dureté que celui de la lèvre d'étanchéité.

Selon l'invention, l'extrémité libre ou pointe 31 de la lèvre 30 est revêtue d'un glissant de surface 36, homogène, préférablement en matière plastique à faible coefficient de frottement tel que par exemple une polyoléfine, ou du PTFE tandis que la face inférieure de la lèvre est revêtue par flocage d'un revêtement souple 37 facilitant le glissement et retenant les poussières.

La lèvre 30 est d'une longueur et d'une courbure telle que lorsque la vitre est complètement baissée, elle est déployée suivant la position montrée en trait plein sur la figure 2, faisant avec la perpendiculaire X au plan moyen de l'âme 17 du talon, c'est-à-dire sensiblement avec une parallèle à la glace, un angle ⁻ supérieur à 45°, sa pointe étant alors en contact avec la glace, mais dès que la glace commence à remonter, la lèvre se courbe en se rapprochant du plan X, comme indiqué en trait discontinu, le plan moyen de la lèvre 30 formant alors avec cette même perpendiculaire un angle β inférieur à 45°. Cette déformation est plus accentuée sur les véhicules où la glace au cours de la manoeuvre de fermeture de la baie, se déplace transversalement vers le lécheur.

Sur la figure 2 où les repères 12a et 12b se rapportent à la face de la vitre en regard du lécheur respectivement en position complètement baissée et en position complètement relevée, les distances D1 et D2 représentent les distances de la glace à l'axe X du talon, respectivement dans ces deux positions et les axes Xa et Xb indiquent les positions de l'axe du mécanisme d'entraînement correspondant aux positions 12a et 12b, Xm représentant la position moyenne de cet axe. Dans le cas de glaces planes la distance entre Xa et Xb est égale à la distance d'entre les deux positions extrêmes de la glace, représentée plane pour simplifier mais qui peut être également légèrement bombée.

Les angles ⁻, β, la longueur, la courbure et la souplesse de la lèvre 30 sont choisis de manière que la lèvre exerce sur la glace une pression faible mais suffisante pour en assurer l'étanchéité et répartie entre les deux revêtements évitant ainsi l'usure du revêtement 37 et le rayage de la glace par le revêtement 36.

Le corps du talon 14 est de préférence réalisé en un matériau de plus grande dureté que ses saillies ou nervures 20, 21 et que la partie active de la lèvre qui doit être suffisamment souple pour accommoder les éventuels défauts de planéité de la glace ou pour tenir compte du bombé de celle-ci.

## Revendications

1. Profil d'étanchéité pour glace mobile (12) déplaçable entre une position baissée (12a) et une position levée (12b) et qui est plus proche du profil d'étanchéité dans sa position levée (12b) que dans sa position baissée (12a), ledit profil comportant un corps (13) et au moins une lèvre d'étanchéité (30) présentant un premier revêtement souple (37), de fibres ou poils textiles floqués et un second revêtement (36) plus dur, à bonnes propriétés de glissement déposé sur la pointe (31) de la lèvre (30), caractérisé en ce que la lèvre (30) est orientée de manière à faire avec la direction perpendiculaire à la glace (12) un angle inférieur à 90°, d'une part, et est de longueur et de courbure telles, d'autre part, que la lèvre exerce sur la glace (12) une pression faible mais suffisante pour en assurer l'étanchéité et répartie entre les deux revêtements (36, 37) pour éviter l'usure du revêtement souple (37) qui est en contact avec ladite glace (12) au cours du déplacement de cette dernière et le rayage de la glace (12) par le revêtement plus dur (36), ce dernier assurant la précision du guidage et la continuité de l'étanchéité.

2. Profil d'étanchéité selon la revendication 1, notamment lécheur de glace ou vitre d'automobile, caractérisé en ce que ladite lèvre (30) est orientée de manière à faire avec la direction perpendiculaire à la glace (12) un angle de préférence inférieur à 45° lorsque la glace (12) est complètement escamotée et un angle supérieur à 45° lorsque la glace ferme la baie qu'elle équipe.

3. Profil d'étanchéité selon la revendication 1, caractérisé en ce que les premier et second revêtements (37, 36) sont contigüs, le flocage (37) régnant sur la plus grande partie de la surface de la lèvre (30) destinée à venir en contact avec la glace.

4. Profil d'étanchéité selon l'une quelconque des revendications précédentes, caractérisé en ce que le second revêtement (36) est en polytétrafluoroéthylène, en polyoléfine ou en un matériau analogue.

5. Profil d'étanchéité selon l'une quelconque des revendications précédentes, caractérisé en ce que ledit second revêtement (36) est réalisé par trempage ou pulvérisation avec masque ou prétraitement des zones ne devant pas être recouvertes.

## Patentansprüche

1. Dichtungprofil für eine bewegliche Scheibe (12), die zwischen einer unteren Lage (12a) und einer angehobenen Lage (12b) versetzbar ist und die dem Dichtungsprofil in ihrer angehobenen Lage (12b) näherliegt als in ihrer unteren Lage (12a), wobei das genannte Profil einen Körper (13) und mindestens eine Dichtlippe (30) aufweist, die eine erste weiche Verkleidung (37) aus aufgeflockten Textilfasern oder -haaren aufweist, sowie eine zweite, härtere Verkleidung (36) mit guten Gleiteigenschaften, die am Ende (31) der Lippe (30) aufgetragen ist, **dadurch gekennzeichnet**, daß die Lippe (30) einerseits so ausgerichtet ist, daß sie mit der Richtung senkrecht zur Scheibe (12) einen Winkel bildet, der kleiner ist als 90°, und andererseits eine solche Länge und Krümmung aufweist, daß die Lippe auf die Scheibe (12) einen geringen Druck ausübt, der aber ausreicht, um dadurch die Abdichtung sicherzustellen, und der zwischen den beiden Verkleidungen (36, 37) aufgeteilt ist, um die Abnutzung der weichen Verkleidung (37), die in Berührung mit der genannten Scheibe (12) im Verlauf deren Versetzung steht, sowie das Verkratzen der Scheibe (12) durch die härtere Verkleidung (36) zu vermeiden, welche ihrerseits die Genauigkeit der Führung und die Beständigkeit der Abdichtung sicherstellt.

2. Dichtungsprofil nach Anspruch 1, insbesondere Abstreifleiste für die Scheibe oder Glasscheibe eines Kraftfahrzeugs, **dadurch gekennzeichnet**, daß die genannte Lippe (30) so ausgerichtet ist, daß sie mit der Richtung senkrecht zur Scheibe (12) einen Winkel bildet, der bevorzugt kleiner ist als 45°, wenn die Scheibe (12) vollständig versenkt ist, und einen Winkel, der größer ist als 45°, wenn die Scheibe die Öffnung verschließt, zu der sie gehört.

3. Dichtungsprofil nach Anspruch 1, **dadurch gekennzeichnet**, daß die erste und die zweite Verkleidung (37, 36) aneinandergrenzen, wobei die Beflockung (37), die auf dem größten Teil der Oberfläche der Lippe (30) vorliegt, dazu bestimmt ist, in Berührung mit der Scheibe zu gelangen.

4. Dichtungsprofil nach irgendeinem der vorangehenden Ansprüche, **dadurch gekennzeichnet**, daß die zweite Verkleidung (36) aus Polytetrafluorethylen, aus Polyolefin oder aus einem analogen Material besteht.

5. Dichtungsprofil nach irgendeinem der vorangehenden Ansprüche,**dadurch gekennzeichnet**, daß die genannte zweite Verkleidung (36) durch Tauchbeschichtung oder Aufspritzen mit einer Maske oder durch Vorbehandlung jener Zonen ausgeführt ist, die nicht abgedeckt werden sollen.

## Claims

1. A seal for a movable window glass (12) movable between a low position (12a) and a high position (12b) and which is closer to the seal when in its high position (12b) than when in its low position (12a), the said seal comprising a body (13) and at least one sealing lip (30) having a first flexible coating (37) of flocced fibers or textile hairs and a second, harder coating (36) having good sliding properties, the said coating being deposited on the tip (31) of the lip (30), the seal being characterized firstly in that the lip (30) is disposed in such a manner as to make an angle of less than 90° with the perpendicular to the glass (12), and secondly in that the lip is of length and curvature such that it exerts a pressure on the glass (12) that is small but sufficient to provide sealing, which pressure is distributed between the two coatings (36, 37) to avoid wear of the flexible coating (37) which is in contact with said glass (12) during displacement thereof and to avoid scratching of the glass (12) by the harder coating (36) which provides accuracy of guidance and continuity of sealing.

2. A seal according to claim 1, in particular for wiping the bottom of a car window glass, characterized in that said lip (30) is disposed in such a manner as to make an angle preferably of less than 45° with the direction perpendicular to the glass (12) when the glass (12) is fully retracted, and to make an angle of greater than 45° when the glass closes the bay in which it is fitted.

3. A seal according to claim 1, characterized in that the first and second coatings (37, 36) are contiguous, with the floccing (37) extending over the larger portion of the area of the lip (30) that is intended to come into contact with the glass.

4. A seal according to any preceding claim, characterized in that the second coating (36) is made of polytetrafluoroethylene, of polyolefin, or of an analogous material.

5. A seal according to any preceding claim, characterized in that the said second coating (36) is made by dipping or spraying using a mask or pretreatment of the zones that are not to be covered.
